# EUROPÄISCHE PATENTSCHRIFT

(11) **EP 0 972 221 B1**
(45) Veröffentlichungstag und Bekanntmachung des Hinweises auf die Patenterteilung: **21.05.2003**
(21) Anmeldenummer: 98917095.6
(22) Anmeldetag: 27.03.1998
(51) Int. Cl.: G02B 26/02

(54) **MATRIXSCHALTER**
MATRIX SWITCH
COMMUTATEUR MATRICIEL

(30) Priorität: 02.04.1997 DE 19713630
(43) Veröffentlichungstag der Anmeldung: 19.01.2000
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); LEHR, Heinz, D-10783 Berlin (DE); PICARD, Antoni, D-65347 Eltville (DE)
(74) Vertreter: Fuchs Mehler Weiss & Fritzsche
(86) Internationale Anmeldenummer: EP9801808
(87) Internationale Veröffentlichungsnummer: WO98044377

(56) Entgegenhaltungen:
- EP-A- 0 567 143
- WO-A-91/10150
- US-A- 4 955 686

## Beschreibung

Die Erfindung betrifft einen Matrixschalter für Lichtwellenleiter.

Zum Verbinden von optischen Glasfaserleitungen sind Matrixschalter bekannt, mit denen N optische Eingangskanäle beliebig auf M optische Ausgangskanäle geschaltet werden können. Die Anzahl der zu verschaltenden Glasfasern ist vom jeweiligen Anwendungsbereich abhängig. Im Bereich der Telekommunikation finden Matrixschalter mit einer Vielzahl von Ein- und Ausgangskanälen Verwendung. Ein Matrixschalter wird in der Druckschrift WO 91/10150 A beschrieben.

Es sind mechanische Matrixschalter bekannt, bei denen Spiegel oder Prismen mit hoher Präzision bewegt werden. Auf Spiegel- oder Prismenanordnungen beruhende Schalter benötigen einen sehr stabilen und präzisen Aufbau. Insbesondere ist eine exakte Führung der mikrooptischen Komponenten erforderlich. Die für annehmbare optische Dämpfungswerte geforderte Präzision ist im allgemeinen mit einem hohen technischen Aufwand verbunden.

Bei einem bekannten System zum Verschalten von optischen Glasfaserleitungen werden die Fasern aufeinander ausgerichtet, indem XYZ-Manipulatoren Einzeloder Vielfachstecker miteinander konnektieren. Damit wird zwar eine effektive und stabile Kopplung zwischen den Glasfasern hergestellt, allerdings macht die Kopplung der Glasfasern über Stecker einen großen mechanischen Aufwand und aufwendige Steuermechanismen notwendig, um die Justagegenauigkeit für den Steckvorgang zu gewährleisten.

Die bekannten thermooptischen Matrixschalter sind nur für kleine NxM-Anordnungen sinnvoll, da die Verluste groß sind und die Herstellung teuer ist.

Der Erfindung liegt die Aufgabe zugrunde, einen Matrixschalter für Lichtwellenleiter zu schaffen, der einen verhältnismäßig einfachen und kompakten Aufbau hat und eine Verschaltung der Lichtwellenleiter mit hoher Präzision bei verhältnismäßig geringen Schaltzeiten erlaubt.

Die Lösung dieser Aufgabe erfolgt erfindungsgemäß mit den Merkmalen des Patentanspruchs 1.

Die nachfolgende Zuordnung der Begriffe "Eingang" und "Ausgang" dient nur zur Beschreibung der geometrischen Anordnung. Jeder Lichtwellenleiter kann sowohl ein Eingangssignal und/oder (bi-direktional) ein Ausgangssignal transportieren. Auch die Begriffe "Zeilen" und "Spalten" sind nicht dahingehend zu verstehen, daß die eingangs- und ausgangsseitigen Schlitten exakt rechtwinklig zueinander angeordnet sind. Allein entscheidend ist, daß sich die Schlitten auf ihren Bahnen kreuzen.

Die Schlitten, die in Richtung der Zeilen und Spalten verschiebbar sind, haben vorzugsweise eine langgestreckte Form und können z.B. als Stäbe oder Stangen ausgebildet sein.

Zur Positionierung der Schlitten, an denen die Eingangs- bzw. Ausgangslichtwellenleiter befestigt sind, ist eine Anordnung von Anschlägen in Zeilen und Spalten vorgesehen. Diese Positionierungsanordnung erlaubt, den Vorschubweg der ausgangsseitigen Schlitten zu begrenzen, so daß diese exakt in der Position festgelegt sind, in der die Eingangslichtwellenleiter an die Lichtwellenleiter der ausgangsseitigen Schlitten angekoppelt werden können.

Darüber hinaus weisen die eingangs- und/oder ausgangsseitigen Schlitten Anschläge auf, die derart angeordnet sind, daß die eingangs- bzw. ausgangsseitigen Schlitten in der Position festgelegt sind, in der die Eingangsauf die Ausgangslichtwellenleiter exakt ausgerichtet sind.

Nach Vorgeben eines bestimmten Schaltvorganges durch die Positionierungsanordnung kann die Verschaltung der Lichtwellenleiter dadurch erfolgen, daß die ausgangsseitigen Schlitten bis zu den Anschlägen der Positionierungsanordnung vorgeschoben werden. Hierzu ist die Positionierungsanordnung vorteilhaft im Endbereich der ausgangsseitigen Schlitten angeordnet. Damit ist die Koppelposition exakt festgelegt. Schrittmotoren oder dgl., mit denen sich ein bestimmter Vorschubweg vorgeben läßt, sind nicht erforderlich.

Es ist jedoch auch denkbar, die Positionierungsanordnung nicht im Endbereich, sondern unterhalb der ausgangsseitigen Schlitten anzuordnen, beispielsweise im Bereich, wo die Ankoppelung der Lichtwellenleiter stattfindet. Hierzu weisen die ausgangsseitigen Schlitten vorteilhaft zusätzliche Anschläge auf, die in die Ebene der Anschläge der Positionierungsanordnung ragen, wodurch der Vorschubweg dieser Schlitten begrenzbar ist.

Bei einer bevorzugten Ausführungsform sind die Anschläge der eingangsund/oder ausgangsseitigen Schlitten als Anschlagelemente mit komplementären Teilekonturen ausgebildet, die zur Feinjustierung der Schlitten dienen. Da die Teilekonturen der Anschläge ineinandergreifen, ist der Matrixschalter gegen Erschütterungen weitgehend unempfindlich. Selbst wenn die eingangsseitigen Schlitten nicht exakt auf die ausgangsseitigen Schlitten ausgerichtet sein sollten, werden diese durch die Teilekonturen auch bei einem seitlichen Versatz in eine Position gebracht, in der die Eingangslichtwellenleiter exakt auf die Ausgangslichtwellenleiter ausgerichtet sind.

Die Anschlagelemente der eingangsseitigen Schlitten weisen vorzugsweise jeweils eine U- oder V-förmige Kontur und die Anschlagelemente der ausgangsseitigen Schlitten jeweils eine entsprechende U- oder V-förmige Nut auf. Für die Anschlagelemente der eingangsseitigen Schlitten sind auch kreisförmige oder teilkreisförmige Konturen denkbar, die in entsprechende U-förmige Nuten passen. Die Seitenflanken der Nut bilden Führungsflächen für die Anschlagelemente der eingangsseitigen Schlitten.

Bei einer weiteren bevorzugten Ausführungsform sind die Enden der Eingangsund Ausgangslichtwellenleiter in Faserhaltern mit der gleichen Außenkontur angeordnet, wobei die Faserhalter der Ausgangslichtwellenleiter in rinnenförmigen Vertiefungen von in die Ebene der eingangsseitigen Schlitten vorstehenden Anschlägen der ausgangsseitigen Schlitten angeordnet sind. Die Faserhalter der Ausgangslichtwellenleiter sind in den rinnenförmigen Vertiefungen der Anschläge derart angeordnet, daß der Abschnitt der Nut, der in die Ebene der eingangsseitigen Schlitten vorsteht, die Faserhalter der Eingangslichtwellenleiter aufnimmt. Da sowohl die Eingangslichtwellenleiter als auch die Ausgangslichtwellenleiter durch die gleiche Grubenstruktur positioniert werden, sind die Glasfasern optimal aufeinander ausgerichtet.

Vorzugsweise sind die Anschläge einstückiger Bestandteil der Schlitten. So können an den Schlitten beispielsweise die Lichtwellenleiter aufnehmende Vorsprünge ausgebildet sein. Die Anschläge können aber auch durch die Faserhalter selbst gebildet werden.

In vorteilhafter Ausgestaltung sind die Anschläge der eingangs- und/oder ausgangsseitigen Schlitten federnd an den Schlitten befestigt, um den Aufprall beim Einkoppeln abzuschwächen. Im statischen Zustand ist die Kraft dieser Federn zwischen Schlitten und Anschlag gleich der Kraft, mit der der eingangsseitige Schlitten gegen den ausgangsseitigen Schlitten drückt.

Der Lichtwellenleiter bzw. der mit einem Anschlag versehene Lichtwellenleiter kann auch federnd in einer Nut des eingangsseitigen Schlittens angeordnet sein. In diesem Fall ist die Federkraft vorzugsweise kleiner als die Kraft, mit der der eingangsseitige Schlitten gegen den ausgangsseitigen Schlitten drückt.

Mit den federnd an den Schlitten befestigten Anschläge wird auch erreicht, daß die Anschläge den quer zur Vorschubrichtung der Schlitten wirkenden Zentrierungskräften nachgeben können. Eine einfache Zentrierung ist aber auch dann möglich, wenn die Schlitten selbst eine gewisse Flexibilität haben oder derart geführt sind, daß geringfügige seitliche Bewegungen möglich sind.

Die Positionierungsanordnung weist vorzugsweise elektromagnetische, thermoelektrische, piezoelektrische oder pneumatische Antriebselemente zur Betätigung der Anschläge auf. Mit den Antriebselementen können die Anschläge zwischen zwei bistabilen Positionen, d.h. in den Vorschubweg der Schlitten eingreifend bzw. außerhalb des Vorschubweges befindlich, hin- und hergeschaltet werden. Dabei ist die Genauigkeit der Bewegung ohne Bedeutung für das Schaltverhalten der Matrix. Als Anschläge können beispielsweise Bolzen, Stifte, Platten oder dgl. verwendet werden.

Die Anzahl der Antriebselemente, die für die Betätigung der Schlitten erforderlich ist, wird vorteilhafterweise dadurch reduziert, daß die Schlitten in die Schaltposition federnd vorgespannt sind. Die Federelemente haben den Vorteil, daß die Schlitten mit einer definierten Vorspannung ineinandergreifen. Ansteuerbare Antriebselemente brauchen bei dieser bevorzugten Ausführungsform nur zum Zurückziehen der Schlitten in die Ausgangsposition vorgesehen sein.

Wenn die Schlitten federnd vorgespannt sind, ist prinzipiell nur ein eingangsseitiges und ausgangsseitiges Antriebselement erforderlich, wobei die beiden Antriebselemente sämtliche eingangs- bzw. ausgangsseitigen Schlitten betätigen. Die beiden Antriebselemente für die Eingangs- und Ausgangsseite können z.B. als kammartige Rechen oder Walzen ausgebildet sein, die entsprechende Eingriffselemente wie Haken oder Zähne auf den Schienen erfassen. Diese Ausführungsform hat zwar einen besonders einfachen Aufbau, nachteilig ist jedoch, daß zur Rekonfiguration alle Verbindungen gelöst werden müssen.

Wenn nur die Koppelstellen gelöst werden sollen, die auch geschaltet werden, so können die Eingriffselemente derart ausgebildet sein, daß diese zwischen einer Position, in der sie mit den Antriebselementen in Eingriff sind und einer Position umgeschaltet werden können, in der sie mit den Antriebselementen außer Eingriff sind. Die Eingriffselemente können an den Schlitten oder an den Bügeln angeordnet sein. Da an den Betätigungsmechanismus der Eingriffselemente in bezug auf die Genauigkeit nur relativ geringe Anforderungen zu stellen sind, kann dieser kostengünstig realisiert werden.

Die optische Kopplung der Lichtwellenleiter kann über einen Freistrahl erfolgen, wobei gegebenenfalls geeignete Linsensysteme zur Verbesserung der Koppeleffizienz eingesetzt werden können. Ebenfalls kann die optische Kopplung der Lichtwellenleiter über einen ausreichend kleinen Spalt erfolgen, so daß auf strahlformende Elemente verzichtet werden kann, wobei der Spalt zwischen den Faserstirnflächen auch vollständig durch eine Flüssigkeit gefüllt werden kann, die im Brechungsindex den Lichtwellenleitern angepaßt ist. Eine weitere Möglichkeit zur Verbesserung der Kopplung liegt in der Verwendung von speziellen Fasern mit im Stirnflächenbereich aufgeweitetem Kern (TEC), die sich durch eine extrem kleine numerische Apertur auszeichnen, d.h. ohne weitere Optik das Lichtsignal in einem fast parallelen Strahl emittieren. Darüber hinaus ist die Kopplung über einen physikalischen Kontakt der Lichtwellenleiterstirnflächen möglich. Vorteilhafterweise ist eine zusätzliche Bewegung eines Lichtwellenleiters oder der Lichtwellenleiter axial zur Faserrichtung vorgesehen, um beim Kontaktieren eine Beschädigung der Enden zu vermeiden. Das Lichtsignal wird dabei ohne Freistrahlstrecke unmittelbar aus der Eingangsfaser in die Ausgangsfaser geleitet. Damit die Stirnfaserflächen nicht aufeinandergleiten und dadurch zerstört werden, ist hierbei aber eine höhere Präzision erforderlich.

Der erfindungsgemäße Matrixschalter hat einen kompakten Aufbau, wobei die Koppelverluste und das Nebensprechen gering sind. Die Schaltzeiten liegen im Bereich < 1 sec. Die Anordnung ist daher inbesondere geeignet, um rekonfigurierbare Verteileranlagen aufzubauen. Der Einsatzbereich erstreckt sich dabei sowohl auf Aufgaben innerhalb von Gebäuden, z.B. Intranet, Computeranlagen als auch zur Verschaltung von Fasern in externen Schaltkästen und Faserschächten für die Telekommunikation, z.B. zur Konfiguration von Teilnehmeranschlüssen.

Für die Herstellung der Präzisionsteile können kostengünstige Mikrotechniken, insbesondere die LIGA-Technik eingesetzt werden.

Im folgenden werden unter Bezugnahme auf die Zeichnungen mehrere Ausführungsbeispiele der Erfindung näher erläutert.

Es zeigen:
- Fig. 1: eine Ausführungsform des Matrixschalters in schematischer Darstellung,
- Fig. 2: eine Teilansicht des Matrixschalters von Fig. 1,
- Fig. 3a: eine Ausführungsform der eingangs- und ausgangsseitigen Schlitten, deren Anschläge U-förmige Teilekonturen aufweisen,
- Fig. 3b: eine Ausführungsform der eingangs- und ausgangsseitigen Schlitten, deren Anschläge V-förmige Teilekonturen aufweisen,
- Fig. 3c: eine Ausführungsform der eingangs- und ausgangsseitigen Schlitten, bei der die Faserhalter der Eingangs- und Ausgangsfasern in einer rinnenförmigen Struktur der ausgangsseitigen Schlitten positioniert sind,
- Fig. 3d: eine Ausführungsform eines Schlittens mit einem an seiner Unterseite befindlichen Anschlag,
- Fig. 3e,f: eine Ausführungsform eines Schlittens mit einem Anschlag an seiner Stirnfläche und
- Fig. 3g-i: Ausführungsformen eines Schlittens mit einem federnd an dessen Stirnfläche befestigten Anschlag.

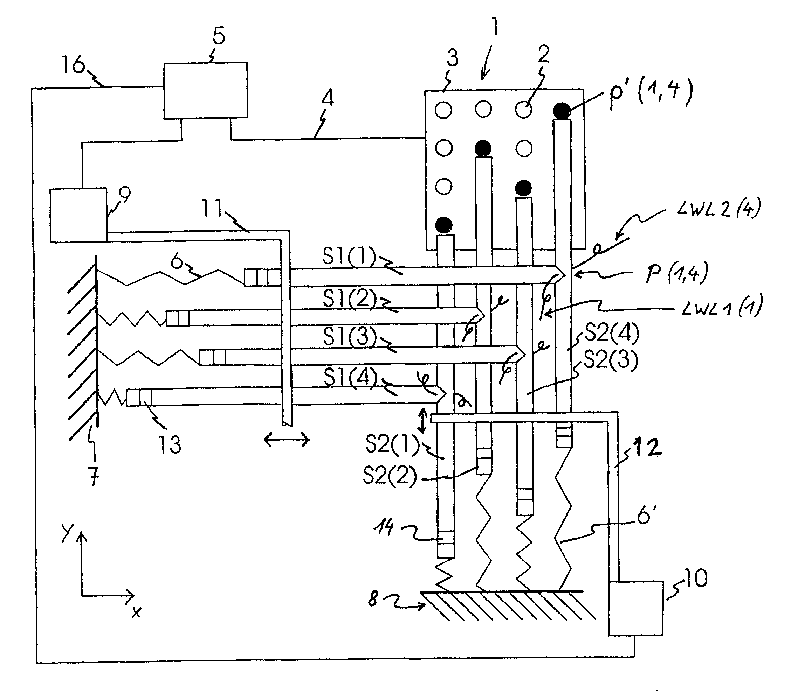

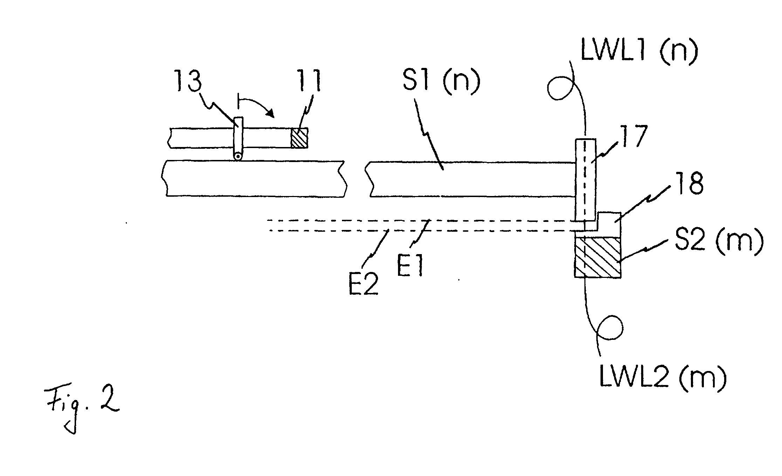

Fig. 1 zeigt einen Matrixschalter zur Verschaltung von N Eingangsfasern und M Ausgangsfasern in schematischer Darstellung. Die N Eingangsfasern LWL1(n) mit [n = 1 ... N] sind an stabförmigen Schlitten S1(n) mit [n = 1 ... N] befestigt, die in einer Ebene E₁ in gleichbleibenden Abständen parallel zueinander angeordnet und in Längsrichtung, d.h. in Richtung der X-Achse verschiebbar geführt sind. Die M Ausgangsfasern LWL2(m) mit [m = 1 ... M] sind an stabförmigen Schlitten S2(m) mit [m = 1 ... M] befestigt, die in einer Ebene E₂ in gleichbleibenden Abständen parallel zueinander angeordnet sind und in Längsrichtung, d.h. in Richtung der Y-Achse, verschiebbar geführt sind. Die Eingangs- und Ausgangsfasern sind derart an den eingangs- bzw. ausgangsseitigen Schlitten befestigt, daß deren Stirnflächen durch Verschieben der Schlitten aufeinander ausgerichtet und somit die Eingangs- an die Ausgangsfasern gekoppelt werden können (Fig. 2). Der Matrixschalter hat N x M Koppelstellen P(n*, m*), die nach Art einer Matrix in der XY-Ebene verteilt sind.

Zur exakten Positionierung der ausgangsseitigen Schlitten S2(m) mit den Ausgangsfasern LWL2(m) ist eine Positionierungsanordnung 1 mit N x M Anschlägen für die ausgangsseitigen Schlitten vorgesehen, die eine N x M Matrix in der gleichen Größe wie die N x M Matrix der Koppelstellen P(n*, m*) bilden. Die Anschläge 2 der Positionsanordnung 1 sind Bolzen, die in einer Lochplatte 3 quer zur Längsrichtung der ausgangsseitigen Schlitten S2(m) verschiebbar geführt sind. Jedem Bolzen ist ein elektromagnetisches Antriebselement zugeordnet, das unterhalb der Lochplatte 3 angeordnet und in Fig. 1 nicht dargestellt ist.

Die elektromagnetischen Antriebselemente der Bolzen 2 sind derart ausgebildet, daß die Bolzen in eine Sperrposition, in der sie aus der Lochplatte 3 vorstehen und eine Freigabeposition verschiebbar sind, in der sie in der Lochplatte versenkt sind. In Fig. 1 sind die in der Sperrposition befindlichen Bolzen 2 als Punkte und die in der Freigabeposition befindlichen Bolzen als Kreise dargestellt. Die Antriebselemente zur Betätigung der Bolzen 2 sind über eine Steuerleitung 4 mit einer zentralen Steuereinheit 5 verbunden, die die Schaltpositionen P'(n*,m*) vorgibt.

Die eingangsseitigen Schlitten S1(n) sind in Richtung der ausgangsseitigen Schlitten, d.h. in Richtung der X-Achse, mittels Druckfedern 6 vorgespannt, die einerseits an einem ortsfesten Körper 7 und andererseits an den Enden der Schlitten S1(n) befestigt sind. Die ausgangsseitigen Schlitten S2(m) sind ebenfalls vorgespannt in Richtung der Positionierungsanordnung 1, d.h. in Richtung der Y-Achse, mittels der Druckfedern 6', die einerseits an einem ortsfesten Körper 8 und andererseits an den Enden der Schlitten befestigt sind.

Die Positionierungsanordnung ist hier im Endbereich der ausgangsseitigen Schlitten angeordnet. Die Positionierungsanordnung kann sich jedoch auch unterhalb der ausgangsseitigen Schlitten befinden, wozu die ausgangsseitigen Schlitten zusätzliche Anschläge aufweisen, die in die Ebene der sich in der Sperrposition befindlichen Bolzen hineinragen. Solch eine Anordnung wäre gegenüber der gezeigten Anordnung noch kompakter.

Es kann vorteilhaft sein, die durch die Druckfedern erzeugte Rückstellgeschwindigkeit zu dämpfen. Hierzu können die Schienen beispielsweise in einem Ölbad angeordnet oder mit entsprechenden bremsenden Strukturen versehen werden. Das Ölbad kann gleichzeitig als Indexmatching-Flüssigkeit dienen.

Zum Zurückziehen der Schlitten S1(n) bzw. S2(m) entgegen der Federkraft sind ein eingangsseitiger und ein ausgangsseitiger Stellmotor 9 bzw. 10 vorgesehen, der jeweils einen sich quer zur Vorschubrichtung der Schlitten erstreckenden Bügel 11, 12 antreibt, der mit Eingriffselementen 13 bzw. 14 zusammenwirkt, die auf den Schlitten angeordnet sind. Wenn die Bügel 11 bzw. 12 in die Ausgangsstellung zurückgefahren werden, ergreifen diese die Eingriffselemente 13 bzw. 14 der Schlitten und nehmen die Schlitten mit. Die eingangs- und ausgangsseitigen Stellmotoren 9, 10 sind über Steuerleitungen 15, 16 mit der zentralen Steuereinheit 5 verbunden.

Damit nur einige der Koppelstellen P(n*, m*) gelöst werden können, sind die Eingriffselemente 13, 14 als klappbare Haken ausgebildet, die mittels nicht dargestellter elektromagnetischer Antriebselemente zwischen einer Freigabeposition, in der sie flach auf den Schlitten aufliegen und einer Mitnahmeposition umgeschaltet werden können, in der sie von den Bügeln 11, 12 der Stellmotoren 9, 10 erfaßt werden (Fig. 2).

Die Enden der Eingangsfasern LWL1(n) sitzen in Ferrulen 17, die an den eingangsseitigen Schlitten S1(n) derart befestigt sind, daß die Lichtaustrittsflächen der Eingangsfasern in der Eingangsebene E₁ liegen. Unter Ferrulen versteht man Halter für Lichtwellenleiter. Die Enden der Ausgangsfasern LWL2(m) sind derart in die ausgangsseitigen Schlitten S2(m) eingesetzt, daß die Lichteintrittsenden der Ausgangsfasern in der Ausgangsebene E₂ liegen (Fig. 2). Dadurch, daß die Ebenen E₁ und E₂ zwischen der Oberkante und der Unterkante der Ausgangsschienen bzw. der Eingangsschienen liegen, ist eine Neukonfiguration einzelner Schienen möglich, ohne daß sie von in ihrer Lage gleichbleibenden Schienen behindert werden. Die ausgangsseitigen Schlitten weisen neben den Lichteintrittsenden der Ausgangsfasern in der Ausgangsebene E₂ vorspringende Anschläge 18 für die Ferrule 17 der Eingangsfasern LWL1(n) auf, die selbst Anschläge bilden, so daß die Lichtaustrittsenden der Eingangsfasern in der Schaltposition exakt auf die Lichteintrittsenden der Ausgangsfasern ausgerichtet sind.

Ein Schaltvorgang kann z.B. wie folgt durchgeführt werden. Zunächst werden die klappbaren Haken 13, 14 der eingangs- und ausgangsseitigen Schlitten S1(n) bzw. S2(m) in die Mitnahmeposition ausgeklappt und die Stellmotoren 9, 10 werden in Betrieb gesetzt, um die eingangs- und ausgangsseitigen Schlitten mittels der Bügel 11, 12 in die Ausgangsposition zurückzuziehen. Daraufhin werden die Antriebselemente der Anschläge 2 der Positionierungsanordnung 1 betätigt, um die Anschläge entsprechend der gewünschten Schaltposition P(n*,m*) zu konfigurieren. Nun werden die klappbaren Haken 14 der ausgangsseitigen Schlitten S2(m) in die Freigabeposition umgeklappt, damit die Schlitten durch die Kraft der Druckfedern 6' soweit vorgeschoben werden können, bis diese an den Anschlägen 2 der Positionierungsanordnung 1 anschlagen. Jetzt werden die Haken 13 der eingangsseitigen Schlitten S1(n) in die Freigabeposition umgeklappt, so daß die eingangsseitigen Schlitten durch die Kraft der Druckfedern 6' soweit vorgeschoben werden, bis die Anschläge 17 der eingangsseitigen Schlitten an die Anschläge 18 der ausgangsseitigen Schlitten anschlagen. Damit sind die Eingangsfasern LWL1(n) exakt auf die Ausgangsfasern LWL2(m) ausgerichtet. Zum Aufheben des Schaltzustandes werden die Haken 13, 14 der Schlitten wieder ausgeklappt und die Schlitten werden wieder in ihre Ausgangsstellung zurückgezogen. Wenn die Haken 13, 14 der Schlitten nur einzeln ausgeklappt werden, können die Verbindungen auch selektiv gelöst werden.

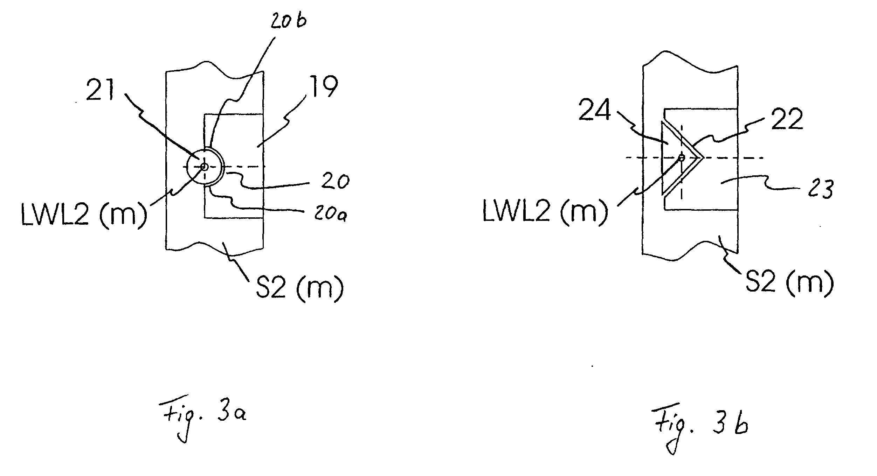

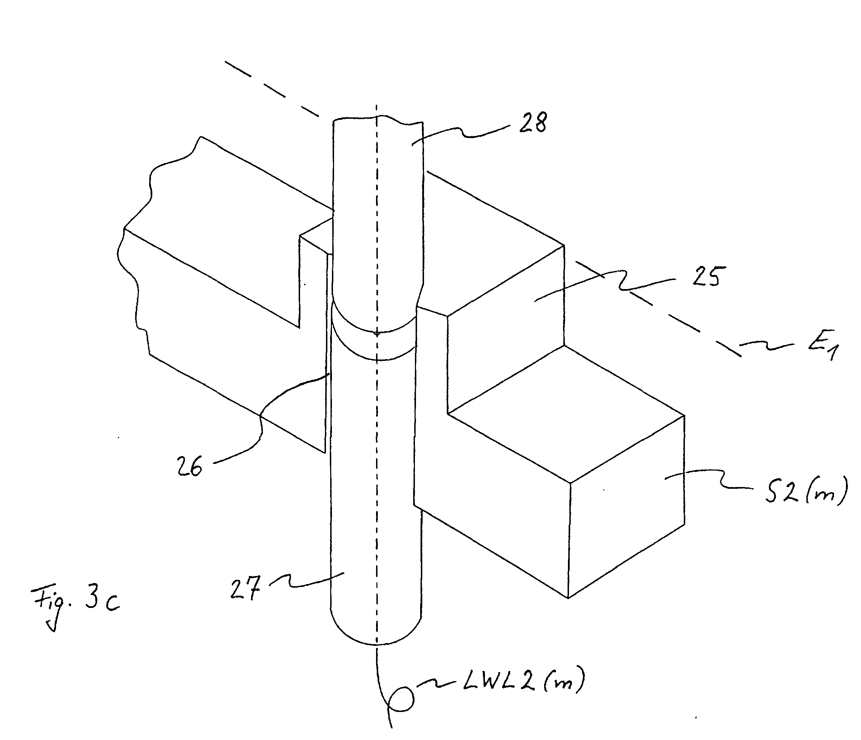

Die Fign. 3a bis 3f zeigen verschiedene Ausführungsformen der Anschläge der Schlitten. Zur Feinjustierung der Schlitten an den Koppelstellen P(n*,m*) weisen die Anschläge der eingangs- und ausgangsseitigen Schlitten S1(n) bzw. S2(m) komplementäre Teilekonturen auf.

Bei der in Fig. 3a dargestellten Ausführungsform weist der Anschlag 19 eines ausgangsseitigen Schlittens S2(m) eine halbschalenförmige oder im wesentlichen U-förmige Nut 20 auf, während das Anschlagelement 21 eines eingangsseitigen Schlittens S1(n) einen kreisförmigen Querschnitt hat, so daß die Seitenflanken 20a, 20b der Nut 20 Führungsflächen für das eingangsseitige Anschlagelement 21 bilden.
Das in Fig. 3b gezeigte Ausführungsbeispiel unterscheidet sich von der unter Bezugnahme auf Fig. 3a beschriebenen Ausführungsform dadurch, daß die Nut 22 des ausgangsseitigen Anschlagselements 23 V-förmig ist, während das eingangsseitige Anschlagselement 24 einen dreieckförmigen Querschnitt hat, so daß dieses passend in der Nut sitzt.

Fig. 3c zeigt eine Ausführungsform, bei der die Eingangs- und Ausgangsfasern LWL1(n) bzw. LWL2(m) in der gleichen Struktur zentriert sind. Der nicht dargestellte ausgangsseitige Schlitten S2(m) weist ein in die Eingangsebene E₁ vorstehendes Anschlagelement 25 mit einer rinnenförmigen Struktur in Form einer V-förmigen Nut 26 auf, das einstückiger Bestandteil des Schlittens ist. In der Nut 26 sind die Ferrule 27 der Ausgangsfaser LWL2(m) befestigt. Die Eingangsfaser LWL1(n) weist eine gleichartige Ferrule 28 wie die Ausgangsfaser auf und ist derart an dem eingangsseitigen Schlitten S1(n) befestigt, daß sie beim Vorschieben des Schlittens in den freien Abschnitt der Nut 26 gedrückt wird. Da die gleiche Grubenstruktur sowohl die Eingangsfaser als auch die Ausgangsfaser aufeinander ausrichtet, sind die Eingangs- und Ausgangsfasern exakt positioniert.

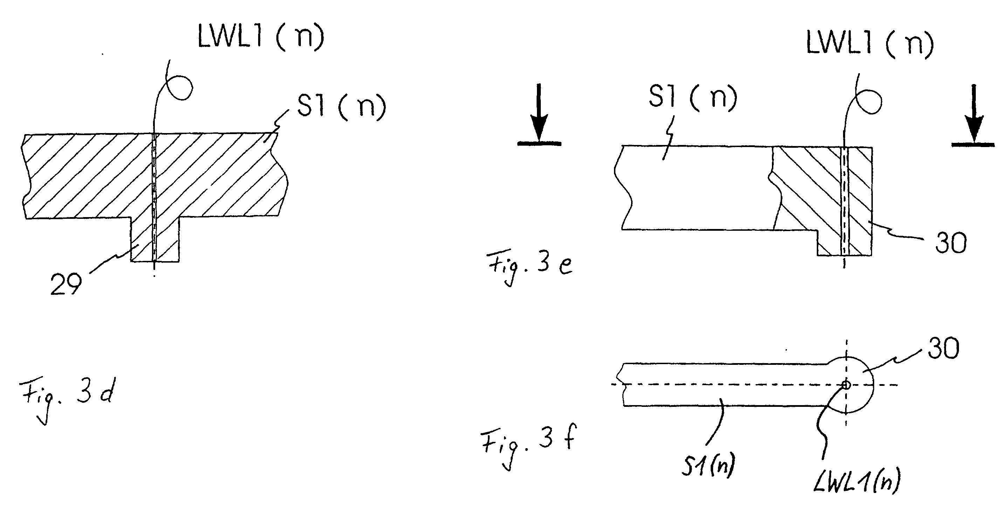

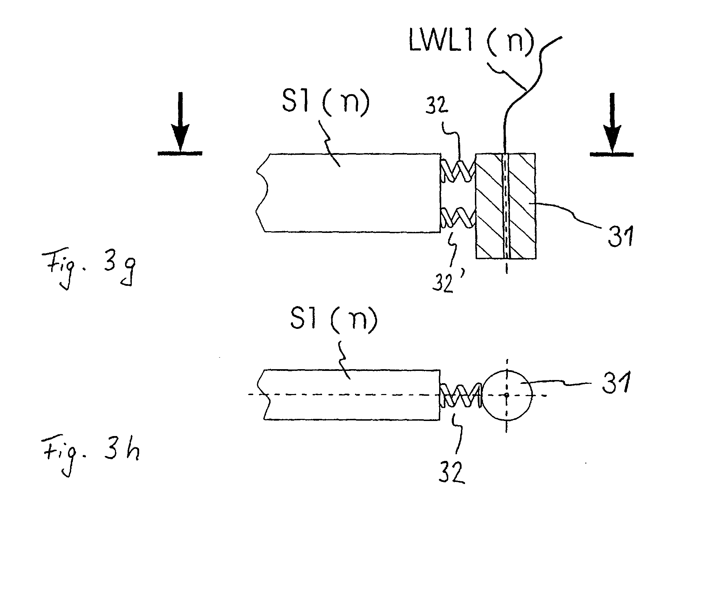

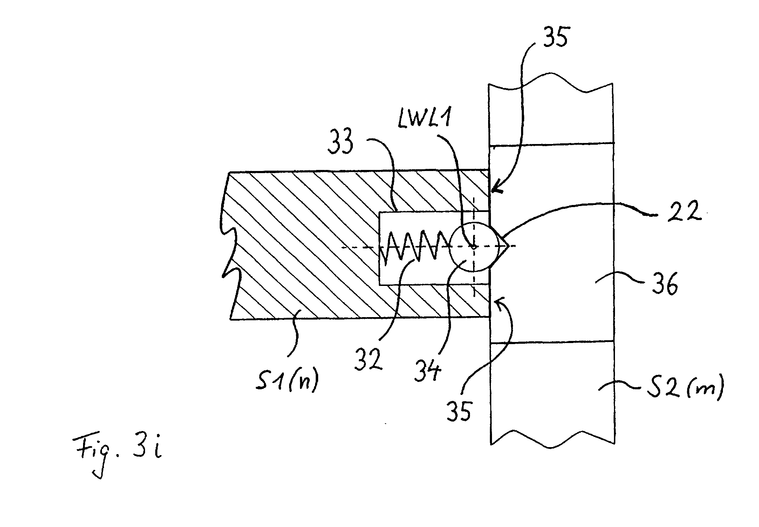

Fig. 3d zeigt ein Ausführungsbeispiel, bei dem das eingangsseitige Anschlagelement 29 mit der Eingangsfaser LWL1(n) als Zapfen ausgebildet ist, der an der Unterseite des Schlittens angeordnet und einstückiger Bestandteil des Schlittens ist. Fig. 3e zeigt eine Ausführungsform, bei der das Anschlagelement 30 als runder Zapfen zusammen mit der Eingangsfaser LWL1(n) an der Stirnseite des Schlitten S1(n) befestigt ist. In der Fig. 3f ist die Draufsicht auf den Schlitten S1(n) dargestellt.

Um den Kraftstoß des Schlittens S1(n) beim Aufprall auf den Schlitten S2(m) zu mildern und einen seitlichen Versatz auszugleichen, kann das Anschlagelement 31 auch federnd gelagert sein. Fign. 3g und 3h zeigen in Seitenansicht und in Draufsicht einen eingangsseitigen Schlitten S1(n), bei dem das die Eingangsfaser LWL1(n) aufnehmende Anschlagelement 31 mittels zweier Druckfedern 32, 32' an der Stirnseite des Schlittens S1(n) befestigt ist.

In der Fig. 3i ist der Schlitten S1(n) an seiner Stirnseite mit einer Ausnehmung 33 versehen, in der die Federn 32, 32' (nicht zu sehen) angeordnet sind, die die Ferrule 34 mit dem Lichtwellenleiter LWL1(n) tragen. Der ausgangsseitige Schlitten S2(m) besitzt in seinem Anschlagelement 36 eine V-förmige Nut 22, in die beim Ankoppeln die Ferrule 34 eingreift. Hierbei wird die Ferrule 34 so weit gegen die Kraft der Feder 32 in die Ausnehmung zurückgeschoben, bis die Stirnfläche 35 des eingangsseitigen Schlittens S1(n) am Anschlagelement 36 anliegt. Die Kraft der Feder 32 ist kleiner als die Kraft, mit der der Schlitten S1(n) mit seinen Stirnflächen 35 gegen den Schlitten S2(m) gedrückt wird.

Auf Ferrule bzw. Faserhalter mit Anschlagstrukturen kann verzichtet werden, wenn mit Schutzschichten versehene Fasern oder nackte Fasern aus widerstandsfähigem Material, wie z.B. Kunststoff, verwendet werden. Durch die oben beschriebene Kontrolle der auftretenden Kräfte beim Ankoppeln wird eine Beschädigung der Lichtwellenleiter wirksam vermieden.

### Bezugszeichen

- 1: Positionierungsanordnung
- 2: Anschlag, Bolzen
- 3: Lochplatte
- 4: Steuerleitung
- 5: Steuereinheit
- 6: Druckfeder
- 6': Druckfeder
- 7: ortsfester Körper
- 8: ortsfester Körper
- 9: Stellmotor
- 10: Stellmotor
- 11: Bügel
- 12: Bügel
- 13: Haken, Eingriffselement
- 14: Haken, Eingriffselement
- 15: Steuerleitung
- 16: Steuerleitung
- 17: Ferrule
- 18: Anschlag
- 19: Anschlag
- 20: Nut
- 20a,b: Seitenflanke
- 21: Anschlagelement
- 22: Nut
- 23: Anschlagelement
- 24: Anschlagelement
- 25: Anschlagelement
- 26: Nut
- 27: Ferrule
- 28: Ferrule
- 29: Anschlagelement
- 30: Anschlagelement
- 31: Anschlagelement
- 32: Feder
- 32': Feder
- 33: Ausnehmung
- 34: Anschlagelement
- 35: Stirnfläche
- 36: Anschlagelement

## Patentansprüche

1. Matrixschalter für Lichtwellenleiter mit
in Zeilen angeordneten Schlitten (S1(n)) an denen jeweils ein Eingangslichtwellenleiter (LWL1(n)) befestigt ist,
in Spalten angeordneten Schlitten (S2(m)), an denen jeweils ein Ausgangslichtwellenleiter (LWL2(m)) befestigt ist,
einer Einrichtung (9-12) zum Vorschieben und Zurückziehen der eingangsseitigen Schlitten (S1(n)) entlang der Zeilen und der ausgangsseitigen Schlitten (S2(m)) entlang der Spalten,
wobei die Schlitten mit den Lichtwellenleitern derart in zwei Ebenen E₁, E₂ angeordnet sind, daß die Eingangslichtwellenleiter durch Verschieben der eingangs- und ausgangsseitigen Schlitten an die Ausgangslichtwellenleiter optisch ankoppelbar sind,
**dadurch gekennzeichnet, daß**
eine Positionierungsanordnung (1) mit in Zeilen und Spalten angeordneten Anschlägen (2) vorgesehen ist, die jeweils in die Ebene E₁ bzw. E₂ der Schlitten (S1(n)) bzw. (S2(m)) verschiebbar sind, so daß der Verschiebeweg der Schlitten begrenzbar ist und daß
die eingangs- und/oder ausgangsseitigen Schlitten (S1(n), S2(m)) Anschläge (17, 18; 19, 21) aufweisen, die derart angeordnet sind, daß die eingangsseitigen Schlitten zum Ankoppeln der Lichtwellenleiter gegen die ausgangsseitigen Schlitten schiebbar sind.

2. Matrixschalter für Lichtwellenleiter nach Anspruch 1, **dadurch gekennzeichnet, daß** die Anschläge (17, 18; 19, 21) der eingangs- und ausgangsseitigen Schlitten (S1(n), S2(m)) komplementäre Teilekonturen aufweisen.

3. Matrixschalter nach Anspruch 2, **dadurch gekennzeichnet, daß** die Anschläge (21) der eingangsseitigen Schlitten (S1(n)) jeweils eine U-oder V-förmige, kreisförmige oder teilkreisförmige Kontur und die Anschläge (19) der ausgangsseitigen Schlitten S2(m) jeweils eine U-oder V-förmige Nut aufweisen.

4. Matrixschalter nach Anspruch 2 oder 3, **dadurch gekennzeichnet, daß** die Enden der Eingangs- und Ausgangslichtwellenleiter (LWL1(n), LWL2(m)) in Faserhaltern (27, 28) mit der gleichen Außenkontur angeordnet sind, daß die Faserhalter (27) der Ausgangslichtwellenleiter in rinnenförmigen Strukturen (26) von in die Ebene E₁ der eingangsseitigen Schlitten (S1(n)) vorstehenden Anschläge (25) der ausgangsseitigen Schlitten S2(m) angeordnet sind und daß die Faserhalter (28) der Eingangslichtwellenleiter derart angeordnet sind, daß diese zum Ankoppeln der Lichtwellenleiter in die rinnenförmigen Strukturen (26) der Anschläge (25) schiebbar sind.

5. Matrixschalter nach einem der Ansprüche 1 bis 4, **dadurch gekennzeichnet, daß** die Anschläge (18, 29, 30) der eingangs- und/oder ausgangsseitigen Schlitten (S1(n), S2(m)) einstückiger Bestandteil der Schlitten sind.

6. Matrixschalter nach einem der Ansprüche 1 bis 4, **dadurch gekennzeichnet, daß** die Anschläge (31, 34) der eingangs- und/oder ausgangsseitigen Schlitten (S1(n), S2(m)) federnd an den Schlitten befestigt sind.

7. Matrixschalter nach einem der Ansprüche 1 bis 6, **dadurch gekennzeichnet, daß** die Positionierungsanordnung (1) Antriebselemente zur Betätigung der Anschläge (2) aufweist.

8. Matrixschalter nach einem der Ansprüche 1 bis 7, **dadurch gekennzeichnet, daß** die Einrichtung (9-12) zum Vorschieben und Zurückziehen der Schlitten (S1(n), S2(m)) Federelemente (6, 6') zum Vorschieben der Schlitten in die Schaltposition und Antriebselemente zum Zurückziehen der Schlitten in die Ausgangsposition aufweist.

9. Matrixschalter nach Anspruch 8, **dadurch gekennzeichnet, daß** die Antriebselemente der Einrichtung (9-12) zum Vorschieben und Zurückziehen der Schlitten quer zur Vorschubrichtung der Schlitten sich erstreckende und in Vorschubrichtung der Schlitten verschiebbare Bügel (11, 12) aufweisen und daß die Schlitten Eingriffselemente (13, 14) aufweisen, die derart angeordnet sind, daß diese beim Zurückziehen der Bügel (11, 12) von diesen erfaßt werden.

10. Matrixschalter nach Anspruch 9, **dadurch gekennzeichnet, daß** die Eingriffselemente (13, 14) der Schlitten (S1(n), S2(m)) zwischen einer Freigabeposition, in der sie flach auf den Schlitten aufliegen, und einer Mitnahmepostion, in der sie von den Bügeln (11, 12) erfaßt werden, umschaltbar sind.

## Claims

1. A matrix switch for optical fibres with:
slides (S1(n)) arranged in rows on each of which an input optical fibre (LWL1(n)) is attached,
slides (S2(m)) arranged in columns on each of which an output optical fibre (LWL2(m)) is attached,
a device (9 - 12) for advancing and withdrawing the input slides (S1(n)) along the rows and the output slides (S2(m)) along the columns,
whereby the slides with the optical fibres are arranged in two planes E₁, E₂ such that the input optical fibres can be optically coupled to the output optical fibres through shifting the input and output slides,
**characterised in that**
a positioning arrangement (1) with stops (2) arranged in rows and columns is provided, each of which can be shifted into the plane E₁ or plane E₂ of the slides (S1(n)) and (S2(m)), respectively, so that the shift path of the slides can be limited and **in that**
the input and/or output slides (S1(n), S2(m)) have stops (17, 18; 19, 21) which are arranged so that the input slides can be shifted against the output slides to couple the optical fibres.

2. The matrix switch for optical fibres as claimed in Claim 1, **characterised in that** the stops (17, 18; 19, 21) of the input and output slides (S1(n), S2(m)) have complementary partial contours.

3. The matrix switch as claimed in Claim 2 **characterised in that** the stops (21) of the input slides, (S1(n)) each have a U- or V-shaped, circular, or semicircular contour and the stops (19) of the output slide (S2(m)) each have a U- or V-shaped groove.

4. The matrix switch as claimed in Claim 2 or 3, **characterised in that** the ends of the input and output optical fibres (LWL1(n), LWL2(m)) are arranged in fibre holders (27, 28) with the same exterior contour, that the fibre holders (27) of the output optical fibres are arranged in channel-shaped structures (26) of stops (25) of the output slides (S2(m)) projecting into the plane E₁ of the input slides (S1(n)), and that the fibre holders (28) of the input optical fibres are arranged such that they can be slid into the channel-shaped structures (26) of the stops (25) for coupling of the optical fibres.

5. The matrix switch as claimed in any one of Claims 1 to 4, **characterised in that** the stops (18, 29, 30) of the input and/or output slides (S1(n), S2(m)) are an integral component of the slides.

6. The matrix switch as claimed in any one of Claims 1 to 4, **characterised in that** the stops (31, 34) of the input and/or output slides (S1(n), S2(m)) are spring-mounted to the slides.

7. The matrix switch as claimed in any one of Claims 1 to 6, **characterised in that** the positioning arrangement (1) has drive elements for activating the stops (2).

8. The matrix switch as claimed in any one of Claims 1 to 7, **characterised in that** the device (9-12) for advancing and withdrawing the slides (S1(n), S2(m) has spring elements (6, 6') for advancing the slides into the switch position and drive elements for withdrawing the slides into the initial position.

9. The matrix switch as claimed in Claim 8, **characterised in that** the drive elements of the device (9 - 12) for advancing and withdrawing the slides have straps (11, 12) which extend transverse to the advance direction of the slides and can be shifted in the advance direction of the slides, and **in that** the slides have contact elements (13, 14) which are arranged such that they are caught by the straps (11, 12) when the latter are withdrawn.

10. The matrix switch according to Claim 9, **characterised in that** the contact elements (13, 14) of the slides (S1(n), S2(m)) can be switched between a release position in which they lie flat against the slides and a catch position in which they are caught by the straps (11, 12).

## Revendications

1. Commutateur matriciel pour fibres optiques comprenant
des coulisseaux (S1(n)) disposés en ligne sur lesquels est fixée une fibre optique d'entrée (LWL1(n)),
des coulisseaux disposés en colonne (S2(m) sur lesquels est fixée respectivement une fibre optique de sortie (LWL2(m)),
un dispositif (9-12) pour l'avance et le recul des coulisseaux (S1(n)) côté entrée le long des lignes et des coulisseaux (S2(m)) côté sortie le long des colonnes,
les coulisseaux avec les fibres optiques étant disposés dans deux plans E₁, E₂ de sorte que les fibres optiques d'entrée peuvent être accouplées optiquement aux fibres optiques de sortie par déplacement des coulisseaux de sortie et d'entrée,
**caractérisé en ce**
**qu'**un dispositif de positionnement (1) est prévu avec des butées (2) disposées en ligne et en colonne, qui sont mobiles respectivement dans les plans E₁ respectivement E₂ des coulisseaux (S1(n)) respectivement (S2(m)), de sorte que le déplacement des coulisseaux peut être limité et en ce que
les coulisseaux (S1(n) S2(m)) côté entrée et/ou sortie présentent des butées (17, 18; 19, 21) qui sont disposées de sorte que les coulisseaux côté entrée peuvent être poussés en direction des coulisseaux côté sortie pour l'accouplement des fibres optiques.

2. Commutateur matriciel pour fibres optiques selon la revendication 1, **caractérisé en ce que** les butées (17, 18; 19, 21) des coulisseaux (S1(n)), S2(m)) côté entrée et/ou sortie présentent des contours partiels complémentaires.

3. Commutateur matriciel selon la revendication 2, **caractérisé en ce que** les butées (21) des coulisseaux côté entrée (S1(n)) présentent respectivement un contour en forme de cercle ou en forme de demi-cercle respectivement en forme de U ou de V et les butées (19) des coulisseaux côté sortie S2(m) présentent respectivement une rainure en forme de U ou de V.

4. Commutateur matriciel selon la revendication 2 ou 3, **caractérisé en ce que** les extrémités des fibres optiques d'entrée et de sortie (LWL1(n), LWL(m)) sont disposées dans des supports de fibres (27, 28) avec le même contour externe, **en ce que** les supports (27) des fibres optiques sont disposés dans des structures en forme de rainure (26) de butées (25) des coulisseaux côté sortie (S2(m)), qui font saillie dans le plan E1 des coulisseaux côté entrée (S1(n)) et **en ce que** les supports (28) des fibres optiques d'entrée sont disposés de sorte qu'ils sont mobiles pour l'accouplement des fibres optiques dans les structures (26) en forme de rigole des butées (25).

5. Commutateur matriciel selon l'une des revendications 1 à 4, **caractérisé en ce que** les butées (18, 29, 30) des coulisseaux (S1(n)), S2(m)) côté entrée et/ou sortie font partie des coulisseaux d'une seule pièce.

6. Commutateur matriciel selon l'une des revendications 1 à 4, **caractérisé en ce que** les butées (31, 34) des coulisseaux (S1(n)), S2(m)) côté entrée et/ou sortie sont fixées de manière élastique aux coulisseaux.

7. Commutateur matriciel selon l'une des revendications 1 à 6, **caractérisé en ce que** la disposition de positionnement (1) présente des éléments d'entraînement pour l'actionnement des butées (2).

8. Commutateur matriciel selon l'une des revendications 1 à 7, **caractérisé en ce que** le dispositif (9-12) présente pour l'avance et le recul des coulisseaux (S1(n), S2(m)) des éléments ressort (6, 6') pour l'avance des coulisseaux en position de commutation et des éléments d'entraînement pour le retrait des coulisseaux en position de sortie.

9. Commutateur matriciel selon la revendication 8, **caractérisé en ce que** les éléments d'entraînement du dispositif (9-12) pour l'avance et le retrait des coulisseaux présentent des étriers (11, 12) mobiles dans le sens d'avance des coulisseaux et s'étendant transversalement à la direction d'avance des coulisseaux et **en ce que** les coulisseaux présentent des éléments d'engagement (13, 14) qui sont disposés de manière à être saisis par les étriers (11, 12).lors du retrait de ces derniers.

10. Commutateur matriciel selon la revendication 9, **caractérisé en ce que** les éléments d'engagement (13, 14) des coulisseaux (S1(n), S2(m)) peuvent commuter entre une position de libération dans laquelle ils reposent sur les chariots et une position d'entraînement dans laquelle ils sont appréhendés par les étriers (11, 12).
